# EUROPEAN PATENT SPECIFICATION

(11) **EP 3 896 871 B1**
(45) Date of publication and mention of the grant of the patent: **02.10.2024**
(21) Application number: 20169689.5
(22) Date of filing: 15.04.2020
(51) Int. Cl.: H04B 10/2507

(54) **PATTERN IDENTIFICATION FOR SIGNAL RECOVERY IN PON UP-STREAM**
MUSTERERKENNUNG ZUR SIGNALRÜCKGEWINNUNG IN PON STROMAUFWÄRTS
IDENTIFICATION DE MODÈLES POUR LA RÉCUPÉRATION DE SIGNAL EN AMONT D'UN RÉSEAU OPTIQUE PASSIF

(43) Date of publication of application: 20.10.2021
(73) Proprietor: Nokia Solutions and Networks Oy, 02610 Espoo (FI)
(72) Inventor: Ou, Yanni, 70435 Stuttgart (DE); Bonk, René, 70435 Stuttgart (DE); Borkowski, Robert, 70435 Stuttgart (DE); Pfeiffer, Thomas, 70435 Stuttgart (DE)
(74) Representative: IP HILLS NV

(56) References cited:
- WO-A1-2020/051753
- US-A1- 2006 280 502
- US-A1- 2016 006 510

## Description

### Technical Field

Various example embodiments relate to the field of telecommunication. In particular, embodiments of the invention relate to a method and system for developing a rapid, precise and dynamic data recovery scheme for upstream transmission of bursts from Optical Network Units, abbreviated ONUs, to an Optical Line Termination, abbreviated OLT, in a Passive Optical Network, abbreviated PON.

### Background

A Passive Optical Network, referred to as PON, based on power splitting, is a promising solution for access networks with a Point-To-MultiPoint, P2MP, architecture at a high data-rate. Considering the increasing demand of subscribers for advanced multimedia applications such as e.g. video-on-demand services and online gaming, future PONs are anticipated to provide a higher speed transmission, for example 50-Gb/s and beyond, over a reach of at least several tens of km. WO2020051753A1 for example describes a data transmission method, and the related device and system, which can shorten the time consumed by data transmission and improve the data transmission efficiency of a passive optical network. Time Division Multiple-Access PON architecture is employed in standardized PON generations for the upstream direction, allowing different network users or ONUs to share the upstream bandwidth based on their individual time slot assigned by the OLT. Increasing the bit rate per wavelength channel in a PON while maintaining the use of intensity modulation and direct detection is very challenging.

At high serial rates, the performance of the signal in upstream PONs will be impaired by dispersion and bandwidth-limitations, such as for example Inter-Symbol Interference or ISI induced by fiber dispersion in the C-band and part of the O-band which will limit the transmission reach. Additionally, cost-effective high-performance components at the OLT and ONU are unavailable, as for example the development of high bandwidth (>35 GHz) and high gain Avalanche PhotoDiode receivers is immature, as for example premium dual-drive Mach-Zehnder Modulators or Electro-absorption Modulated Lasers are costly. Therefore, using components from 10 Gb/s or 25 Gb/s PON will cause further ISI induced by the limited bandwidth of the receiver and limit the reach for 25/50 Gb/s PON systems. Finally, especially in the upstream direction of a PON, the ONUs are located at different distances with respect to the OLT. Different optical power levels and different levels of signal impairments reaching the receiver at the OLT side can therefore be expected. Another challenge is that Low Capex and Opex solutions for transparent coexistence of future high-speed PONs with legacy PONs are expected by network operators such as for example FSAN, IEEE AND ITU SG-15, posting significant challenges in terms of opto-electronic bandwidth and resilience to fibre chromatic dispersion.

### Summary

Several electronic and optical approaches are known from literature to compensate for ISI in PONs. For example, Digital Signal Processing or DSP is one of the most promising methods to compensate the signal impairments by ISI. DSP comprises the application of for example signal equalization, conditioning, Forward Error Correction coding, etc. to compensate for these impairments. However, due to the TDMA-burst mode nature of the upstream path in PONs, specific mechanisms are required to adapt and improve existing DSPs to be applicable to the optical access domain. Existing signal recovery can hardly function effectively in upstream PONs as the burst-mode payload can be extremely short, for example down to a few tens of bytes, which requires a rapid signal recovery adaptation before the start of each payload, which is difficult to achieve at the above-mentioned bit rates. Additionally, such a signal recovery adaption also requires the least overhead of the payload to avoid reduction of the upstream transmission efficiency, while the current signal recovery methods usually have a long training sequence. Considering the burst payloads from multiple ONUs are employed by different components and have various distances to the OLT, the receiver at the OLT is facing payloads with dynamic range, e.g., different received optical power, hence different Signal-to-Noise Ratios, and dispersion impaired signals bringing further challenges in the signal recovery performance.

The electronic techniques known from literature to compensate for ISI in PONs have the common challenge that optimum performance would require a rapid adaptation of equalizer parameters from one ONU to another, i.e. within the ns-range to avoid the waste of bandwidth. A fast convergence time is not available, and non-optimum performance is accepted with fixed DSP settings or longer convergence time is accepted causing loss of usable bandwidth. In future generations of PON, new services and client systems can be very demanding, e.g., 5G Radio Access Network, which will cause the change of requirements on PON systems. For example, neither the waste of bandwidth nor the lack of high-speed performances can be affordable for the above applications, though they might be tolerable in some cases for residential applications.

Several optical methods are proposed in the literature to compensate ISI in PON. Applying optical signal processing with, e.g., tight optical filtering by delay interferometer is also not suitable for burst-mode, as the wavelength instability occurs due to the bursting of laser (especially DML) which exclude narrow optical filters. Optical dispersion compensation methods, such as using a dispersion compensation fiber and a fiber Bragg gratings, can result in a high cost each of them must be applied to each ONU. Additionally, deploying them as post-compensation in the OLT for shared costs cannot provide the compensation over the full range of distortion. Furthermore, either approach is compatible with legacy PONs generations. Finally, the mentioned optical schemes add a significant insertion loss which must be overcome.

Even though DSP is one of the most promising methods to compensate for signal impairments induced by ISI, it will introduce a cost and a complexity into the low-cost PON scenario, such as for example the introduction of a high-speed Analog-to-Digital Converter and/or a Digital-to-Analog Converter and high-power consumption. Thus, known DSP-engines from other fields need to be modified and tailored to address the challenges observed in the upstream PON. Electronic Dispersion Compensation or EDC is another method know from literature to compensate for ISI in PONs. EDC share similar challenges with DSP, but without the ADC/DAC problem and demonstrates less power consumption. At this stage, neuro-networks are immature considering the limited performance improvement that can be achieved. Also, the use of neural networks is still too complicated for PON on multiple aspects: the cost, the computational complexity and time, implementation complexity and the power consumption.

It is thus an object of embodiments of the present invention to propose a method and a system, which do not show the inherent shortcomings of the prior art.

The scope of protection sought for various embodiments of the invention is set out by the independent claims.

The embodiments and features described in this specification that do not fall within the scope of the independent claims, if any, are to be interpreted as examples useful for understanding various embodiments of the invention.

There is a need for developing a rapid, precise and dynamic data recovery scheme for upstream PONs.

Amongst others, it is an object of embodiments of the invention to develop a data recovery scheme for upstream PONs which has a feasible implementation with lower cost and complexity.

This object is achieved, according to a first example aspect of the present disclosure, by a system for determining a signal recovery configuration for upstream transmission of bursts from optical network units, abbreviated ONUs, to an optical line termination, abbreviated OLT, in a passive optical network, abbreviated PON, wherein the system comprises:
- means configured to receive an upstream burst from one of the ONUs, wherein said upstream burst is distorted by upstream transmission impairments;
- means configured to detect a received pattern in the upstream burst, wherein a header of the upstream burst comprises an identifier and a preamble comprising the received pattern;
- means configured to determine a pattern identification descriptor for the ONU indicative for a level of difference between the received pattern and the predefined pattern corresponding to the received pattern;
- means configured to store a predetermined correspondence between predefined patterns and signal recovery configurations in a predetermined look-up table comprising predefined pattern identification descriptors; and wherein to each predefined pattern identification descriptor corresponds a signal recovery configuration;
- means configured to access the predetermined look-up table;
- means configured to match the pattern identification descriptor to one of the predefined pattern identification descriptors from the predetermined look-up table; and
- means configured to look-up in the look-up table a signal recovery configuration corresponding to the predefined pattern identification descriptor matching the pattern identification descriptor, thereby determining a signal recovery configuration for the upstream burst corresponding to a predefined pattern corresponding to the received pattern of the upstream burst, thereby determining a signal recovery configuration for said upstream burst.

The system according to a first example aspect of the invention can be used in any high-speed burst mode PON that requires rapid signal recovery with lower complexity and power consumption for achieving higher transmission rate along longer distances. The detection and the identification of the signal impairments faced by upstream bursts transmitted from ONUs to OLTs is performed based on the detection of a received pattern embedded into a header of an upstream burst. In other words, each upstream burst comprises a received pattern embedded into its header, and the received pattern comprises information indicative for an impairment experienced by the upstream burst in the PON. Preferably, each upstream burst comprises a received pattern embedded into a preamble of its header.

The system according to a first example aspect of the invention suggests a pattern recognition method to enable the identification and categorisation of different ONUs in the PHY layer without enquiring the MAC layer knowledge as this MAC layer knowledge is typically not available towards the physical devices in the PON. Such identification and categorisation requires a short overhead of the payload per upstream burst from each ONU as applied in current generations of PON, and it will be used to obtain the extent of physical layer impairments of this ONUs, such as for example fibre dispersion and/or ONU components' bandwidth limitation. The result of the identification and categorisation will be useful to decide a fast signal recovery with low complexity afterwards to better serve the ONU's transmission with lower power consumption. The employment of the system according to a first example aspect of the invention simplifies the signal processing needs and can be especially useful in future upstream Time Division Multiplexing-PONs that require higher rates and longer reach.

With the system according to a first example aspect of the invention, it becomes possible to learn the unique features occurring in the header received by the OLT-side receiver for each of the individual ONU or groups of ONUs. These features can exclusively reflect the degrees of transmission impairments induced by different levels of bandwidth-limited transceiver and fibre dispersion, i.e., fiber transmission length, in a fine granularity. For each degree of impairments, at the OLT-receiver side, a corresponding configuration for the signal recovery configuration scheme will be employed, such as for example a specific tap number and tap weights configurations for a receiver equalisation. It is also desired to be sensitive to the impairments to facilitate the learning of the unique features as accurately as possible.

The system comprises predetermined knowledge about a correspondence between predefined patterns and corresponding signal recovery configurations. The received pattern is compared to the predefined patterns already known by the system and the predefined pattern which matches the received pattern is the one that corresponds to the received pattern. In other words, the received pattern is the logical pattern that is transmitted from the ONU to the OLT and/or to the system for example comprised in the OLT. This logical pattern is also known to the system beforehand as a predefined pattern, for example the logical pattern was defined e.g. by the system management. The receiver of the system and/or of the OLT detects the distorted received pattern and compares this distorted received pattern to the predefined patterns for finding the correct settings for the subsequent signal recovery. In other words, matching the received pattern to one of the predefined patterns can be defined as identifying the predefined pattern which comprises the same logical pattern as the received pattern, and wherein the logical pattern is not impacted or distorted by upstream transmission impairments. In other words, finding the predefined pattern corresponding to the received pattern can be defined as identifying the predefined pattern which comprises the same logical pattern as the received pattern, and wherein the logical pattern is not impacted or distorted by upstream transmission impairments. Alternatively, matching the received pattern to one of the predefined patterns or finding the predefined pattern corresponding to the received pattern can be defined as identifying the predefined pattern which demonstrates the highest probability within the predefined patterns known by the system to comprise a logical pattern which is identical to the logical pattern comprised in the received pattern. In other words, a received pattern is matched to a predefined pattern when the logical pattern comprised in the predefined pattern is identified by the system as the one, of the predefined patterns, demonstrating the highest probability to be identical to the logical pattern comprised in the received pattern.

According to example embodiments, the system comprises:
- means configured to receive an upstream burst from one of the ONUs;
- means configured to detect a received pattern in a header of the upstream burst;
- means configured to determine a pattern identification descriptor for the ONU indicative for a level of difference between the received pattern and a predefined pattern corresponding to the received pattern;
- means configured to access a predetermined look-up table comprising predefined pattern identification descriptors, and in which to each predefined pattern identification descriptor corresponds a signal recovery configuration;
- means configured to match the pattern identification descriptor to one of the predefined pattern identification descriptors from the predetermined look-up table; and
- means configured to look-up in the look-up table a signal recovery configuration corresponding to the predefined pattern identification descriptor matching the pattern identification descriptor, thereby determining a signal recovery configuration for the upstream burst.

The predetermined look-up table, also referred to as LUT, may be stored in the system according to a first example aspect of the invention. For example, the predetermined look-up table may preferable be stored in the means for accessing the predetermined look-up table. The LUT according to a first example aspect of the invention maps each pattern identification descriptor from each amount of impairment induced on the upstream burst to its corresponding signal recovery configuration. An impairment amount of an ONU is an indication that the ONU experiences impairments. Such a predetermined LUT may be created from multiple platforms. For example, it can be created based on a simulation platform, emulated testbed platforms or even by applying in-operation processes. The predetermined correspondence between predefined patterns and signal recovery configurations is for example comprised in a predetermined look-up table comprising predefined pattern identification descriptors, and in which to each predefined pattern identification descriptor corresponds a signal recovery configuration.

According to example embodiments, the system is further configured to receive upstream bursts from the plurality of ONUs of the PON and further configured to determine a signal recovery configuration for each upstream burst received from the ONUs.

In this schematic among ONU-1 to ONU-n, when an upstream burst from one ONU-x arrives the OLT, the pattern identification block will start to distinguish this arriving pattern using the pre-defined pattern in its head. As the content of the pre-defined pattern is known, the received pattern at the OLT is then compared with the known content. Multiple methods can be used for such a comparison for distinguishing impairments, such as cross-correlation, spectrum density analysis, image differencing or recognition and other AI related methods, etc.

In this context, n-number of ONUs are located at different distances from the OLT. Additionally, the hardware components implemented in different ONUs differ from each other due to multiple technical characteristics such as for example different manufactures, or variations across wafer runs due to temperature differences, etc. or Capex/Opex reasons e.g. bit rates, potential future pressing engines for business and residential users. Therefore, each upstream burst of each ONU experiences different impairments from the corresponding ONU to the OLT, such as for example fibre chromatic dispersion, imperfection of the ONU and OLT components, as well as the components bandwidth limitation, etc.. Accordingly, based on the learning and the identification of a pattern's distortion from the received pattern of each upstream burst, the relationship between the measured pattern and the impairments can be identified. Therefore, for numerous ONUs, a mapping table can be created and employed as a predetermined look-up table. This table can be applied not only to initialise the PON with data recovery configurations for already operational ONUs, i.e. the ONUs that are already known by the PON, but also for newly added ONUs, i.e. ONUs joining the PON system for first time during the PON's operation.

According to all embodiments, the received pattern is comprised in a preamble of a header of the upstream burst.

This way, the header of the upstream bursts comprises a preamble and the received pattern is comprised in the preamble. The header for example comprises an ITU-T preamble, an identifier, the received pattern and an ITU-T delimiter. The upstream burst comprises the header and the corresponding ONU-x burst data payload.

According to example embodiments, the preamble comprises 32 or 128 bits.

This way, the construction of the preambles is desired to be as short as possible considering the efficiency of the data payload, e.g., 32 or 128 bits.

According to example embodiments, the level of difference between the received pattern and the predefined pattern is indicative for an impact of one or more of the upstream transmission impairments between the ONU and the system.

The level of difference between the known and the received received pattern will be obtained as a pattern identification descriptor, e.g., descriptor-x, which can be in any effective forms like a vector, a matrix or other expressions. This descriptor-x will be further compared with the LUT pattern identification descriptor-a to descriptor-m to find the best match. Once the match is found, for example, is descriptor-b on the LUT, then the corresponding signal recovery configuration-b will be directly set as the initial parameters for recovering the corresponding burst payload in the system according to a first exmaple aspect of the invention. The system can contain different recovery schemes based on the system's necessity, such as for example Feed-Forward Equaliser or FFE, Decision Feedback Equalizer or DFE, Maximum Likelihood Sequence Estimation or MLSE, or any other compensation scheme. The signal recovery configurations setup in the LUT will correspond to each of the used compensation schemes.

According to example embodiments, the system is comprised in the OLT.

Apart from the traditional receiver of the upstream bursts of the ONUs, the additional pattern identification and signal recovery functions are placed in the OLT.

According to example embodiments, the system is operationally coupled to the OLT.

Alternatively, apart from the traditional receiver of the upstream bursts of the ONUs, the additional pattern identification and signal recovery functions are placed in the OLT.

According to example embodiments, the signal recovery configuration comprises one or more of the following:
- feed-forward equalization;
- a decision feedback equalizer model;
- maximum likelihood sequence estimation.

According to example embodiments, the system is configured to access a single predetermined look-up table to determine signal recovery configurations for the upstream bursts received from the plurality of ONUs of the PON.

This way, based on the learning and the identification of a pattern's distortion from the received pattern of each upstream burst, the relationship between the measured pattern and the impairments can be identified. Therefore, for numerous ONUs, a mapping table can be created and employed as a predetermined look-up table. This table can be applied to initialise the PON with data recovery configurations for already operational ONUs, i.e. the ONUs that are already known by the PON.

According to example embodiments, the system is configured to access a single predetermined look-up table to determine signal recovery configurations for upstream bursts received from a ONU newly added to the PON.

This way, based on the learning and the identification of a pattern's distortion from the received pattern of each upstream burst, the relationship between the measured pattern and the impairments can be identified. Therefore, for numerous ONUs, a mapping table can be created and employed as a predetermined look-up table. This table can be applied for newly added ONUs, i.e. ONUs joining the PON system for first time during the PON's operation.

According to a second example aspect, use of a predetermined correspondence between predefined patterns and signal recovery configurations for determining a signal recovery configuration for upstream transmission of bursts from optical network units, abbreviated ONUs, to an optical line termination, abbreviated OLT, in a passive optical network, abbreviated PON, is disclosed wherein the determining a signal recovery configuration comprises:
- receiving an upstream burst from one of the ONUs, wherein said upstream burst is distorted by upstream transmission impairments;
- detecting a received pattern in the upstream burst, wherein a header of the upstream burst comprises an identifier and a preamble comprising the received pattern;
- determining a pattern identification descriptor for the ONU indicative for a level of difference between the received pattern and the predefined pattern corresponding to the received pattern;
- storing a predetermined correspondence between predefined patterns and signal recovery configurations in a predetermined look-up table comprising predefined pattern identification descriptors; and wherein to each predefined pattern identification descriptor corresponds a signal recovery configuration;
- accessing the predetermined look-up table;
- matching the pattern identification descriptor to one of the predefined pattern identification descriptors from the predetermined look-up table; and
looking up in the look-up table a signal recovery configuration corresponding to the predefined pattern identification descriptor matching the pattern identification descriptor, thereby determining a signal recovery configuration corresponding to the predefined pattern corresponding to the received pattern of the upstream burst, thereby determining a signal recovery configuration for the upstream burst.

According to example embodiments, a use of a predetermined look-up table is disclosed, wherein the predetermined look-up table comprises predefined pattern identification descriptors, and in which to each predefined pattern identification descriptor corresponds a signal recovery configuration, for determining a signal recovery configuration for upstream transmission of bursts from optical network units, abbreviated ONUs, to an optical line termination, abbreviated OLT, in a passive optical network, abbreviated PON, wherein the determining a signal recovery configuration comprises:
- receiving an upstream burst from one of the ONUs;
- detecting a received pattern in a header of the upstream burst;
- determining a pattern identification descriptor for the ONU indicative for a level of difference between the received pattern and a predefined pattern corresponding to the received pattern;
- accessing the predetermined look-up table;
- matching the pattern identification descriptor to one of the predefined pattern identification descriptors from the predetermined look-up table;
- looking-up in the look-up table a signal recovery configuration corresponding to the predefined pattern identification descriptor matching the pattern identification descriptor.

The detection and the identification of the signal impairments faced by upstream bursts transmitted from ONUs to OLTs is performed based on the detection of a received pattern embedded into a header of an upstream burst. In other words, each upstream burst comprises a received pattern embedded into its header, and the received pattern comprises information indicative for an impairment experienced by the upstream burst in the PON. Preferably, each upstream burst comprises a received pattern embedded into a preamble of its header. The predetermined look-up table, also referred to as LUT, maps each pattern identification descriptor from each amount of impairment induced on the upstream burst to its corresponding signal recovery configuration. An impairment amount of an ONU is an indication that the ONU experiences impairments. Such a predetermined LUT may be created from multiple platforms. For example, it can be created based on a simulation platform, emulated testbed platforms or even by applying in-operation processes.

Thus, the use according to a second example aspect of the invention suggests a pattern recognition method to enable the identification and categorisation of different ONUs in the PHY layer without enquiring the MAC layer knowledge as this MAC layer knowledge is typically not available towards the physical devices in the PON. Such identification and categorisation requires a short overhead of the payload per upstream burst from each ONU as applied in current generations of PON, and it will be used to obtain the extent of physical layer impairments of this ONUs, such as for example fibre dispersion and/or ONU components' bandwidth limitation. The result of the identification and categorisation will be useful to decide a fast signal recovery with low complexity afterwards to better serve the ONU's transmission with lower power consumption. The employment of the use according to a first example aspect of the invention simplifies the signal processing needs and can be especially useful in future upstream Time Division Multiplexing-PONs that require higher rates and longer reach.

With the use according to a second example aspect of the invention, it becomes possible to learn the unique features occurring in the header received by the OLT-side receiver for each of the individual ONU or groups of ONUs. These features can exclusively reflect the degrees of transmission impairments induced by different levels of bandwidth-limited transceiver and fibre dispersion, i.e., fiber transmission length, in a fine granularity. For each degree of impairments, at the OLT-receiver side, a corresponding configuration for the signal recovery configuration scheme will be employed, such as for example a specific tap number and tap weights configurations for a receiver equalisation. It is also desired to be sensitive to the impairments to facilitate the learning of the unique features as accurately as possible.

According to a third example aspect, a method is disclosed for determining a signal recovery configuration for upstream transmission of bursts from optical network units, abbreviated ONUs, to an optical line termination, abbreviated OLT, in a passive optical network, abbreviated PON, wherein the method comprises the steps of:
- receiving an upstream burst from one of the ONUs, wherein said upstream burst is distorted by upstream transmission impairments;

- detecting a received pattern in the upstream burst, wherein a header of the upstream burst comprises an identifier and a preamble comprising the received pattern;
- determining a pattern identification descriptor for the ONU indicative for a level of difference between the received pattern and the predefined pattern corresponding to the received pattern;
- storing a predetermined correspondence between predefined patterns and signal recovery configurations in a predetermined look-up table comprising predefined pattern identification descriptors; and wherein to each predefined pattern identification descriptor corresponds a signal recovery configuration;
- accessing the predetermined look-up table;
- matching the pattern identification descriptor to one of the predefined pattern identification descriptors from the predetermined look-up table; and
   - looking up in the look-up table a signal recovery configuration corresponding to the predefined pattern identification descriptor matching the pattern identification descriptor, thereby determining a signal recovery configuration corresponding to the predefined pattern corresponding to the received pattern of the upstream burst, thereby determining a signal recovery configuration for the upstream burst.

According to example embodiments, a method is disclosed for determining a signal recovery configuration for upstream transmission of bursts from optical network units, abbreviated ONUs, to an optical line termination, abbreviated OLT, in a passive optical network, abbreviated PON, wherein the method comprises the steps of:
- receiving an upstream burst from one of the ONUs;
- detecting a received pattern in a header of the upstream burst;
- determining a pattern identification descriptor for the ONU indicative for a level of difference between the received pattern and a predefined pattern corresponding to the received pattern;
- accessing the predetermined look-up table comprising predefined pattern identification descriptors, and in which to each predefined pattern identification descriptor corresponds a signal recovery configuration;
- matching the pattern identification descriptor to one of the predefined pattern identification descriptors from the predetermined look-up table;
- looking-up in the look-up table a signal recovery configuration corresponding to the predefined pattern identification descriptor matching the pattern identification descriptor, thereby determining a signal recovery configuration for the upstream burst.

The detection and the identification of the signal impairments faced by upstream bursts transmitted from ONUs to OLTs is performed based on the detection of a received pattern embedded into a header of an upstream burst. In other words, each upstream burst comprises a received pattern embedded into its header, and the received pattern comprises information indicative for an impairment experienced by the upstream burst in the PON. Preferably, each upstream burst comprises a received pattern embedded into a preamble of its header. The predetermined look-up table, also referred to as LUT, maps each pattern identification descriptor from each amount of impairment induced on the upstream burst to its corresponding signal recovery configuration. An impairment amount of an ONU is an indication that the ONU experiences impairments. Such a predetermined LUT may be created from multiple platforms. For example, it can be created based on a simulation platform, emulated testbed platforms or even by applying in-operation processes.

Thus, the method according to a third example aspect of the invention suggests a pattern recognition method to enable the identification and categorisation of different ONUs in the PHY layer without enquiring the MAC layer knowledge as this MAC layer knowledge is typically not available towards the physical devices in the PON. Such identification and categorisation requires a short overhead of the payload per upstream burst from each ONU as applied in current generations of PON, and it will be used to obtain the extent of physical layer impairments of this ONUs, such as for example fibre dispersion and/or ONU components' bandwidth limitation. The result of the identification and categorisation will be useful to decide a fast signal recovery with low complexity afterwards to better serve the ONU's transmission with lower power consumption. The employment of the method according to a second example aspect of the invention simplifies the signal processing needs and can be especially useful in future upstream Time Division Multiplexing-PONs that require higher rates and longer reach.

With the method according to a third example aspect of the invention, it becomes possible to learn the unique features occurring in the header received by the OLT-side receiver for each of the individual ONU or groups of ONUs. These features can exclusively reflect the degrees of transmission impairments induced by different levels of bandwidth-limited transceiver and fibre dispersion, i.e., fiber transmission length, in a fine granularity. For each degree of impairments, at the OLT-receiver side, a corresponding configuration for the signal recovery configuration scheme will be employed, such as for example a specific tap number and tap weights configurations for a receiver equalisation. It is also desired to be sensitive to the impairments to facilitate the learning of the unique features as accurately as possible.

According to a fourth example aspect, a computer program product according to claim 13 is disclosed

According to example embodiments, a computer program product is disclosed comprising computer-executable instructions for causing a system to perform at least the following:
- receiving an upstream burst from one of the ONUs;
- detecting a received pattern in a header of the upstream burst;
- determining a pattern identification descriptor for the ONU indicative for a level of difference between the received pattern and a predefined pattern corresponding to the received pattern;
- accessing the predetermined look-up table comprising predefined pattern identification descriptors, and in which to each predefined pattern identification descriptor corresponds a signal recovery configuration;
- matching the pattern identification descriptor to one of the predefined pattern identification descriptors from the predetermined look-up table;
- looking-up in the look-up table a signal recovery configuration corresponding to the predefined pattern identification descriptor matching the pattern identification descriptor, thereby determining a signal recovery configuration for the upstream burst.

According to a fifth example aspect, a computer readable storage medium according to claim 14 is disclosed

According to example embodiments, a computer readable storage medium is disclosed comprising computer-executable instructions for performing the following steps when the program is run on a computer:
- receiving an upstream burst from one of the ONUs;
- detecting a received pattern in a header of the upstream burst;
- determining a pattern identification descriptor for the ONU indicative for a level of difference between the received pattern and a predefined pattern corresponding to the received pattern;
- accessing the predetermined look-up table comprising predefined pattern identification descriptors, and in which to each predefined pattern identification descriptor corresponds a signal recovery configuration;
- matching the pattern identification descriptor to one of the predefined pattern identification descriptors from the predetermined look-up table;
- looking-up in the look-up table a signal recovery configuration corresponding to the predefined pattern identification descriptor matching the pattern identification descriptor, thereby determining a signal recovery configuration for the upstream burst.

### Brief Description of the Drawings

Some example embodiments will now be described with reference to the accompanying drawings.
Fig. 1A depicts an example embodiment of a system according to the present disclosure.
Fig. 1B depicts an example embodiment of an upstream burst according to the present disclosure.
Fig. 2 shows an example embodiment of a system according to the present disclosure.
Fig. 3 shows an example embodiment of the determination of a signal recovery configuration according to the present disclosure.
Fig. 4 shows an example embodiment of a suitable computing system for performing one or several steps in embodiments of the invention.

### Detailed Description of Embodiment(s)

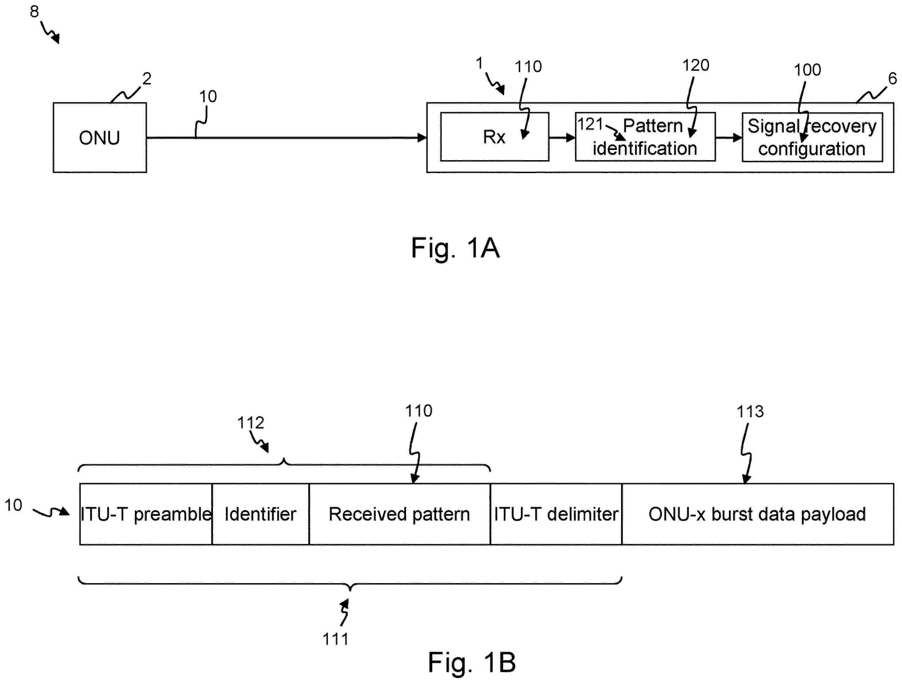

Fig. 1A illustrates a system 1 for determining a signal recovery configuration 100 for an upstream burst 10 from an optical network unit 2 to an optical line termination 6 in a passive optical network 8. The system 1 receives an upstream burst 10 from an ONU 2. The system 1 detects a received pattern 110 in the upstream burst 10. The system 1 determines a pattern identification descriptor 120 for the ONU 2 indicative for a level of difference between the received pattern 110 and the predefined pattern corresponding to the received pattern 110 In other words, the received pattern 110 is the logical pattern that is transmitted from the ONU to the OLT and/or to the system for example comprised in the OLT. This logical pattern is also known to the system beforehand as a predefined pattern 121, for example the logical pattern was defined e.g. by the system management. The receiver of the system and/or of the OLT detects the distorted received pattern 110 and compares this received pattern 110 with the predefined pattern 121 for finding the correct settings for the subsequent signal recovery. The system 1 accesses a predetermined correspondence between predefined patterns and signal recovery configurations. For example, the system 1 accesses predetermined look-up table comprising predefined pattern identification descriptors and in which to each predefined pattern identification descriptor corresponds a signal recovery configuration. The system 1 matches the pattern identification descriptor 120 to one of the predefined pattern identification descriptors from the predetermined look-up table. The system 1 further looks-up in the predetermined look-up table a signal recovery configuration 100 corresponding to the predefined pattern identification descriptor matching the pattern identification descriptor 120, thereby determining a signal recovery configuration 100 for the upstream burst 10.

Fig. 1B illustrates an upstream burst 10 from an optical network unit to an optical line termination in a passive optical network. The upstream burst 10 comprises a header 111 and a data payload 113. The header 111 comprises a preamble 112. The preamble 112 comprises 32 or 128 bits. The preamble 112 comprises a received pattern 110 for the optical network unit.

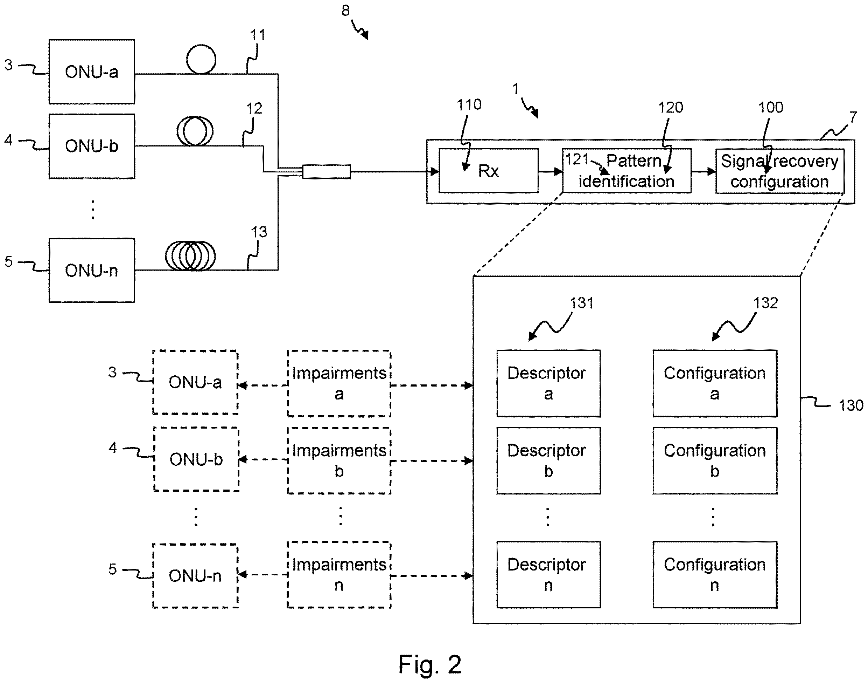

Fig. 2 illustrates a system 1 for determining a signal recovery configuration 100 for an upstream burst 11;12;13 from an optical network unit 3;4;5 to an optical line termination 7 in a passive optical network 8. Components having identical reference numbers than on Figs. 1A or 1B perform the same function. The system 1 receives an upstream burst 11;12;13 from the ONUs 3;4;5. As depicted in Fig. 2, the upstream burst 11; 12; 13 undergo different impairments before all the bursts are combined in the splitter and reach the system 1. The system 1 detects a received pattern 110 in each of the upstream burst 11;12;13. More particularly, the system 1 detects a received pattern 110 in a header of each of the upstream burst 11;12;13. The system 1 determines a pattern identification descriptor 120 for each ONU 3;4;5 indicative for a level of difference between the received pattern 110 and the predefined pattern 121 corresponding to the received pattern 110. In other words, the received pattern 110 is the logical pattern that is transmitted from the ONU to the OLT and/or to the system for example comprised in the OLT. This logical pattern is also known to the system beforehand as a predefined pattern 121, for example the logical pattern was defined e.g. by the system management. The receiver of the system and/or of the OLT detects the distorted received pattern 110 and compares this received pattern 110 with the predefined pattern 121 for finding the correct settings for the subsequent signal recovery. The level of difference between the received pattern 110 and the predefined pattern 121 for an upstream burst is indicative for an impact of an upstream transmission impairment between the corresponding ONU and the system 1. The system 1 accesses predetermined correspondence between predefined patterns 121 and signal recovery configurations. For example, the system 1 accesses a predetermined look-up table 130, also known as LUT, comprising predefined pattern identification descriptors 131 and in which to each predefined pattern identification descriptor 131 corresponds a signal recovery configuration 132. The system 1 matches each pattern identification descriptor 120 to one of the predefined pattern identification descriptors 131 from the predetermined look-up table 130. The system 1 further looks-up in the predetermined look-up table a signal recovery configuration 100 corresponding to each of the predefined pattern identification descriptors 131 matching the pattern identification descriptors 120, thereby determining a signal recovery configuration 100 for each of the upstream bursts 11; 12; 13 received from the ONUs 3;4;5. The system 1 is comprised in the OLT 7. According to an alternative embodiment, the system 1 is a system independent from the OLT and operationally coupled to the OLT 7. The signal recovery configuration 100 comprises for example feed-forward equalization, a decision feedback equalizer model, maximum likelihood sequence estimation. The system 1 access a single look-up table 130 to determine signal recovery configurations 100 for the upstream bursts 11; 12; 13 received from the ONUs 3;4;5.

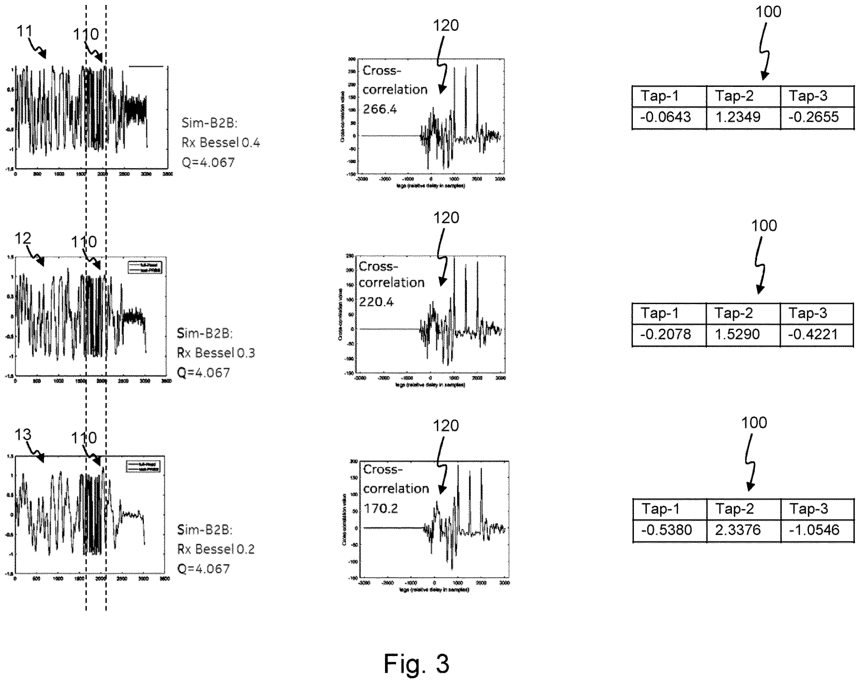

Fig. 3 illustrates a specific example of determining a signal recovery configuration 100 for upstream bursts 11;12;13 from optical network units to an optical line termination in a passive optical network. Components having identical reference numbers than on Figs. 1A or 1B or 2 perform the same function. In this example, the cross-correlation values are used to represent the pattern identification descriptors in the LUT of Fig. 2. The feed-forward equalization also knonw as FFE is used as the example signal recovery scheme in the signal recovery block and assumes a 3-tap implementation. This implementation results in three FFE weights values to be configured for an FFE weights-x in the LUT, corresponding to each identification result. Each FFE weights-x will be used as the initial values for setting up the FFE implementation 100 in compensating the impairments in the data payload. Referring to this specific LUT example, we further provide some simulation results in supporting its technical details shown in Fig. 3. The impairments can be described as a bandwidth limitation equivalence at the OLT side, and in the simulation example depicted in Fig. 3, this equivalent bandwidth limitation is mathematically approximated by using a Bessel low-pass filter, and by setting different 3dB frequency values of this filter implementation. The output signal of the filter will contain different amount of impairments that emulate different ONUs. Upstream bursts 11;12;13 are received at by the system of Fig. 2 which can be comprised in the OLT of the PON after different impairments equivalence corresponding to the ones depicted in Fig. 2. The upstream bursts 11;12;13 comprise logical patterns which are received as received patterns 110 by the system of Fig. 2. The received patterns 110 are compared to predefined patterns. In this example, the Bessel filtering provides the bandwidth limitation of 20%, 30% and 40% of the original bandwidth. In the middle column, the cross-correlation are calculated (the value from the middle peak of each sub-figure) as criteria of the pattern identification descriptors 120. In the last column, the corresponding FFE weights are also obtained using the iterative Live Monitoring System adaptation method, assuming a 3-Tap FFE only for example. The BERs after the FFE recovery for the three cases are all 0, indicating no errors in the payload. According to example embodiments, the system is further configured to determine specific tap weights configurations for the feed-forward equalization.

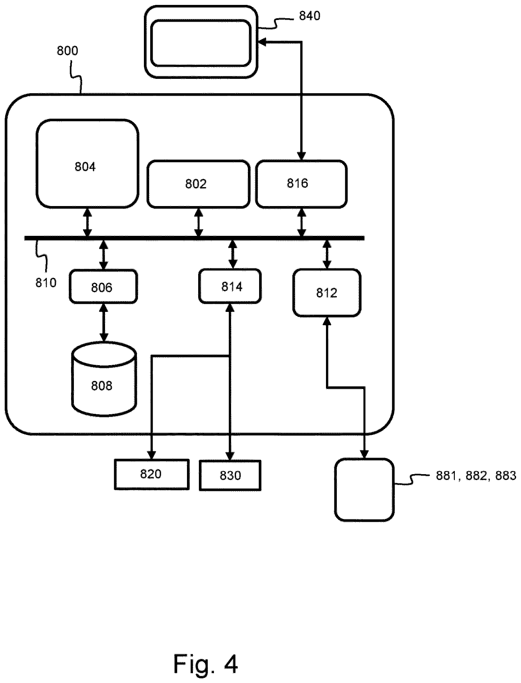

Fig. 4 shows a suitable computing system 800 enabling to implement embodiments of the system. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other computing devices 881, 882, 883. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. Computing system 800 could thus correspond to the system in the embodiment illustrated by Fig. 2.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A system (1) for determining a signal recovery configuration (100) for upstream transmission of bursts (10;11;12;13) from optical network units (2;3;4;5), abbreviated ONUs, to an optical line termination (6;7), abbreviated OLT, in a passive optical network (8), abbreviated PON, wherein said system (1) comprises:
- means configured to receive an upstream burst (10) from one of said ONUs (2), wherein said upstream burst (10) is distorted by upstream transmission impairments;
- means configured to detect a received pattern (110) in said upstream burst (10), wherein a header of said upstream burst (10) comprises an identifier and a preamble comprising said received pattern (110);
- means configured to determine a pattern identification descriptor (120) for said ONU (2) indicative for a level of difference between said received pattern (110) and a predefined pattern (121) corresponding to said received pattern (110);
- means configured to store a predetermined correspondence between predefined patterns and signal recovery configurations in a predetermined look-up table (130) comprising predefined pattern identification descriptors (131); and wherein to each predefined pattern identification descriptor (131) corresponds a signal recovery configuration (132);
- means configured to access said predetermined look-up table (130);
- means configured to match said pattern identification descriptor (120) to one of said predefined pattern identification descriptors (131) from said predetermined look-up table (130); and
- means configured to look-up in said look-up table (130) a signal recovery configuration (100) corresponding to said predefined pattern identification descriptor (131) matching said pattern identification descriptor (120), thereby determining a signal recovery configuration (100) for said upstream burst (10) corresponding to said predefined pattern (121) corresponding to said received pattern (110) of said upstream burst (10), thereby determining a signal recovery configuration (100) for said upstream burst (10).

2. A system (1) according to claim 1, wherein said system (1) is further configured to receive upstream bursts (10;11;12;13) from said plurality of ONUs (2;3;4;5) of said PON (8) and further configured to determine a signal recovery configuration (100) for each upstream burst (10;11;12;13) received from said ONUs (2;3;4;5).

3. A system (1) according to claim 1 or 2, wherein said predefined pattern (121) is comprised in a preamble (112) of a header (111) of said upstream burst (10).

4. A system (1) according to claim 3, wherein said preamble (112) comprises 32 or 128 bits.

5. A system (1) according to any of the preceding claims, wherein said level of difference between said received pattern (110) and said predefined pattern (121) is indicative for an impact of one or more of said upstream transmission impairments between said ONU (2;3;4;5) and said system (1).

6. A system (1) according to any of the preceding claims, wherein said system (1) is comprised in said OLT (6;7).

7. A system (1) according to claim 1, wherein said signal recovery configuration (100) comprises one or more of the following:
- feed-forward equalization;
- a decision feedback equalizer model;
- maximum likelihood sequence estimation.

8. A system (1) according to claim 7, wherein said system (1) is further configured to determine specific tap weights configurations for said feed-forward equalization.

9. A system (1) according to claim 2, wherein said system is configured to access a single predetermined look-up table (130) to determine signal recovery configurations (100) for said upstream bursts (10;11;12;13) received from said plurality of ONUs (2;3;4;5) of said PON (8).

10. A system (1) according to claim 2, wherein said system is configured to access a single predetermined look-up table (130) to determine signal recovery configurations (100) for upstream bursts (10;11;12;13) received from a ONU (2;3;4;5) newly added to said PON (8).

11. Use of a predetermined correspondence between predefined patterns and signal recovery configurations for determining a signal recovery configuration (100) for upstream transmission of bursts (10;11;12;13) from optical network units (2;3;4;5), abbreviated ONUs, to an optical line termination (6;7), abbreviated OLT, in a passive optical network (8), abbreviated PON, wherein said determining a signal recovery configuration comprises:
- receiving an upstream burst (10) from one of said ONUs (2), wherein said upstream burst (10) is distorted by upstream transmission impairments;
- detecting a received pattern (110) in said upstream burst (10), wherein a header of said upstream burst (10) comprises an identifier and a preamble comprising said received pattern (110);
- determining a pattern identification descriptor (120) for said ONU (2) indicative for a level of difference between said received pattern (110) and a predefined pattern (121) corresponding to said received pattern (110);
- storing a predetermined correspondence between predefined patterns and signal recovery configurations in a predetermined look-up table (130) comprising predefined pattern identification descriptors (131); and wherein to each predefined pattern identification descriptor (131) corresponds a signal recovery configuration (132);
- accessing said predetermined look-up table (130);
- matching said pattern identification descriptor (120) to one of said predefined pattern identification descriptors (131) from said predetermined look-up table (130); and
- looking up in said look-up table (130) a signal recovery configuration (100) corresponding to said predefined pattern identification descriptor (131)matching said pattern identification descriptor (120), thereby determining a signal recovery configuration (100) corresponding to said predefined pattern (121) corresponding to said received pattern (110) of said upstream burst (10), thereby determining a signal recovery configuration (100) for said upstream burst (10).

12. A method for determining a signal recovery configuration (100) for upstream transmission of bursts (10;11;12;13) from optical network units (2;3;4;5), abbreviated ONUs, to an optical line termination (6;7), abbreviated OLT, in a passive optical network (8), abbreviated PON, wherein said method comprises the steps of:
- receiving an upstream burst (10) from one of said ONUs (2), wherein said upstream burst (10) is distorted by upstream transmission impairments;
- detecting a received pattern (110) in said upstream burst (10), wherein a header of said upstream burst (10) comprises an identifier and a preamble comprising said received pattern (110);
- determining a pattern identification descriptor (120) for said ONU (2) indicative for a level of difference between said received pattern (110) and a predefined pattern (121) corresponding to said received pattern (110);
- storing a predetermined correspondence between predefined patterns and signal recovery configurations in a predetermined look-up table (130) comprising predefined pattern identification descriptors (131); and wherein to each predefined pattern identification descriptor (131) corresponds a signal recovery configuration (132);
- accessing said predetermined look-up table (130);
- matching said pattern identification descriptor (120) to one of said predefined pattern identification descriptors (131) from said predetermined look-up table (130); and
- looking up in said look-up table (130) a signal recovery configuration (100) corresponding to said predefined pattern identification descriptor (131)matching said pattern identification descriptor (120), thereby determining a signal recovery configuration (100) corresponding to said predefined pattern (121) corresponding to said received pattern (110) of said upstream burst (10), thereby determining a signal recovery configuration (100) for said upstream burst (10).

13. A computer program product comprising computer-executable instructions for causing the system of claim 1 to perform at least the following:
- receiving an upstream burst (10) transmitted from an optical network unit (2;3;4;5), abbreviated ONU, to an optical line termination (6;7), abbreviated OLT, in a passive optical network (8), abbreviated PON, wherein said upstream burst (10) is distorted by upstream transmission impairments;
- detecting a received pattern (110) in said upstream burst (10), wherein a header of said upstream burst (10) comprises an identifier and a preamble comprising said received pattern (110);
- determining a pattern identification descriptor (120) for said ONU (2) indicative for a level of difference between said received pattern (110) and a predefined pattern (121) corresponding to said received pattern (110);
- storing a predetermined correspondence between predefined patterns and signal recovery configurations in a predetermined look-up table (130) comprising predefined pattern identification descriptors (131); and wherein to each predefined pattern identification descriptor (131) corresponds a signal recovery configuration (132);
- accessing said predetermined look-up table (130);
- matching said pattern identification descriptor (120) to one of said predefined pattern identification descriptors (131) from said predetermined look-up table (130); and
- looking up in said look-up table (130) a signal recovery configuration (100) corresponding to said predefined pattern identification descriptor (131)matching said pattern identification descriptor (120), thereby determining a signal recovery configuration (100) corresponding to said predefined pattern (121) corresponding to said received pattern (110) of said upstream burst (10), thereby determining a signal recovery configuration (100) for said upstream burst (10).

14. A computer readable storage medium comprising computer-executable instructions for performing the following steps when the program is run on a system of claim 1:
- receiving an upstream burst (10) transmitted from an optical network unit (2;3;4;5), abbreviated ONU, to an optical line termination (6;7), abbreviated OLT, in a passive optical network (8), abbreviated PON, wherein said upstream burst (10) is distorted by upstream transmission impairments;
- detecting a received pattern (110) in said upstream burst (10), wherein a header of said upstream burst (10) comprises an identifier and a preamble comprising said received pattern (110);
- determining a pattern identification descriptor (120) for said ONU (2) indicative for a level of difference between said received pattern (110) and a predefined pattern (121) corresponding to said received pattern (110);
- storing a predetermined correspondence between predefined patterns and signal recovery configurations in a predetermined look-up table (130) comprising predefined pattern identification descriptors (131); and wherein to each predefined pattern identification descriptor (131) corresponds a signal recovery configuration (132);
- accessing said predetermined look-up table (130);
- matching said pattern identification descriptor (120) to one of said predefined pattern identification descriptors (131) from said predetermined look-up table (130); and
- looking up in said look-up table (130) a signal recovery configuration (100) corresponding to said predefined pattern identification descriptor (131)matching said pattern identification descriptor (120), thereby determining a signal recovery configuration (100) corresponding to said predefined pattern (121) corresponding to said received pattern (110) of said upstream burst (10), thereby determining a signal recovery configuration (100) for said upstream burst (10).

## Patentansprüche

1. System (1) zum Bestimmen einer Signalwiederherstellungsauslegung (100) für eine stromaufwärtige Übertragung von Bursts (10;11;12;13) von optischen Netzwerkeinheiten (2;3;4;5), abgekürzt ONUs, zu einem optischen Leitungsabschluss (6;7), abgekürzt OLT, in einem passiven optischen Netzwerk (8), abgekürzt PON, wobei das System (1) Folgendes umfasst:
- Mittel, die dazu ausgelegt sind, einen stromaufwärtigen Burst (10) von einer der ONUs (2) zu empfangen, wobei der stromaufwärtige Burst (10) durch Beeinträchtigungen der stromaufwärtigen Übertragung verzerrt wird,
- Mittel, die dazu ausgelegt sind, im stromaufwärtigen Burst (10) ein empfangenes Muster (110) zu empfangen, wobei ein Header des stromaufwärtigen Bursts (10) eine Kennung und eine Präambel umfasst, die das empfangene Muster (110) umfasst;
- Mittel, die dazu ausgelegt sind, einen Musteridentifikationsdeskriptor (120) für die ONU (2) zu bestimmen, der ein Maß des Unterschieds zwischen dem empfangenen Muster (110) und einem vordefinierten Muster (121), das dem empfangenen Muster (110) entspricht, anzeigt;
- Mittel, die dazu ausgelegt sind, eine vorbestimmte Entsprechung zwischen vordefinierten Mustern und Signalwiederherstellungsauslegungen in einer vorbestimmten Nachschlagetabelle (130) zu speichern, die vordefinierte Musteridentifikationsdeskriptoren (131) umfasst; und wobei jedem vordefinierten Musteridentifikationsdeskriptor (131) eine Signalwiederherstellungsauslegung (132) entspricht;
- Mittel, die dazu ausgelegt sind, auf die vorbestimmte Nachschlagetabelle (130) zuzugreifen;
- Mittel, die dazu ausgelegt sind, den Musteridentifikationsdeskriptor (120) mit einem der vordefinierten Musteridentifikationsdeskriptoren (131) aus der vorbestimmten Nachschlagetabelle (130) abzugleichen; und
- Mittel, die dazu ausgelegt sind, in der Nachschlagetabelle (130) eine Signalwiederherstellungsauslegung (100) nachzuschlagen, die dem vordefinierten Musteridentifikationsdeskriptor (131) entspricht, der mit dem Musteridentifikationsdeskriptor (120) übereinstimmt, wodurch für jeden stromaufwärtigen Burst (10) eine Signalwiederherstellungsauslegung (100) bestimmt wird, die dem vordefinierten Muster (121) entspricht, das dem empfangenen Muster (110) des stromaufwärtigen Bursts (10) entspricht, wodurch eine Signalwiederherstellungsauslegung (100) für den stromaufwärtigen Burst (10) bestimmt wird.

2. System (1) nach Anspruch 1, wobei das System (1) ferner dazu ausgelegt ist, stromaufwärtige Bursts (10;11;12;13) von der Vielzahl von ONUs (2;3;4;5) des PON (8) zu empfangen, und ferner dazu ausgelegt ist, für jeden von den ONUs (2;3;4;5) empfangenen stromaufwärtigen Burst (10;11;12;13) eine Signalwiederherstellungsauslegung (100) zu bestimmen.

3. System (1) nach Anspruch 1 oder 2, wobei das vordefinierte Muster (121) in einer Präambel (112) eines Headers (111) des stromaufwärtigen Bursts (10) umfasst ist.

4. System (1) nach Anspruch 3, wobei die Präambel (112) 32 oder 128 Bits umfasst.

5. System (1) nach einem der vorhergehenden Ansprüche, wobei das Maß des Unterschieds zwischen dem empfangenen Muster (110) und dem vordefinierten Muster (121) eine Auswirkung von einer oder mehreren der Beeinträchtigungen der stromaufwärtigen Übertragung zwischen der ONU (2;3;4;5) und dem System (1) anzeigt.

6. System (1) nach einem der vorhergehenden Ansprüche, wobei das System (1) im OLT (6;7) umfasst ist.

7. System (1) nach Anspruch 1, wobei die Signalwiederherstellungsauslegung (100) eines oder mehreres von Folgendem umfasst:
- Vorwärtsentzerrung;
- ein Entscheidungsrückmeldungsangleichungsmodell;
- maximale Wahrscheinlichkeitssequenzschätzung.

8. System (1) nach Anspruch 7, wobei das System (1) ferner dazu ausgelegt ist, spezifische Tap-Gewichtungsauslegungen für die Vorwärtsentzerrung zu bestimmen.

9. System (1) nach Anspruch 2, wobei das System dazu ausgelegt ist, auf eine einzelne vorbestimmte Nachschlagetabelle (130) zuzugreifen, um Signalwiederherstellungsauslegungen (100) für die stromaufwärtigen Bursts (10;11;12;13) zu bestimmen, die von der Vielzahl von ONUs (2;3;4;5) des PON (8) empfangen werden.

10. System (1) nach Anspruch 2, wobei das System dazu ausgelegt ist, auf eine einzelne vorbestimmte Nachschlagetabelle (130) zuzugreifen, um Signalwiederherstellungsauslegungen (100) für stromaufwärtige Bursts (10;11;12;13) zu bestimmen, die von einer neu zum PON (8) hinzugefügten ONU (2;3;4;5) empfangen werden.

11. Verwendung einer vorbestimmten Entsprechung zwischen vordefinierten Mustern und Signalwiederherstellungsauslegungen zum Bestimmen einer Signalwiederherstellungsauslegung (100) für eine stromaufwärtige Übertragung von Bursts (10;11;12;13) von optischen Netzwerkeinheiten (2;3;4;5), abgekürzt ONUs, zu einem optischen Leitungsabschluss (6;7), abgekürzt OLT, in einem passiven optischen Netzwerk (8), abgekürzt PON, wobei das Bestimmen einer Signalwiederherstellungsauslegung Folgendes umfasst:
- Empfangen eines stromaufwärtigen Bursts (10) von einer der ONUs (2), wobei der stromaufwärtige Burst (10) durch Beeinträchtigungen der stromaufwärtigen Übertragung verzerrt wird;
- Detektieren eines empfangenen Musters (110) im stromaufwärtigen Burst (10), wobei ein Header des stromaufwärtigen Bursts (10) eine Kennung und eine Präambel umfasst, die das empfangene Muster (110) umfasst;
- Bestimmen eines Musteridentifikationsdeskriptors (120) für die ONU (2), der ein Maß des Unterschieds zwischen dem empfangenen Muster (110) und einem vordefinierten Muster (121), das dem empfangenen Muster (110) entspricht, anzeigt;
- Speichern einer vorbestimmten Entsprechung zwischen vordefinierten Mustern und Signalwiederherstellungsauslegungen in einer vorbestimmten Nachschlagetabelle (130), die vordefinierte Musteridentifikationsdeskriptoren (131) umfasst; und wobei jedem vordefinierten Musteridentifikationsdeskriptor (131) eine Signalwiederherstellungsauslegung (132) entspricht;
- Zugreifen auf die vorbestimmte Nachschlagetabelle (130);
- Abgleichen des Musteridentifikationsdeskriptors (120) mit einem der vordefinierten Musteridentifikationsdeskriptoren (131) aus der vorbestimmten Nachschlagetabelle (130); und
- Nachschlagen einer Signalwiederherstellungsauslegung (100) in der Nachschlagetabelle (130), die dem vordefinierten Musteridentifikationsdeskriptor (131) entspricht, der mit dem Musteridentifikationsdeskriptor (120) übereinstimmt, wodurch eine Signalwiederherstellungsauslegung (100) bestimmt wird, die dem vordefinierten Muster (121) entspricht, das dem empfangenen Muster (110) des stromaufwärtigen Bursts (10) entspricht, wodurch eine Signalwiederherstellungsauslegung (100) für den stromaufwärtigen Burst (10) bestimmt wird.

12. Verfahren zum Bestimmen einer Signalwiederherstellungsauslegung (100) für eine stromaufwärtige Übertragungen von Bursts (10;11;12;13) von optischen Netzwerkeinheiten (2;3;4;5), abgekürzt ONUs, zu einem optischen Leitungsabschluss (6;7), abgekürzt OLT, in einem passiven optischen Netzwerk (8), abgekürzt PON, wobei das Verfahren die folgenden Schritte umfasst:
- Empfangen eines stromaufwärtigen Bursts (10) von einer der ONUs (2), wobei der stromaufwärtige Burst (10) durch Beeinträchtigungen der stromaufwärtigen Übertragung verzerrt wird;
- Detektieren eines empfangenen Musters (110) im stromaufwärtigen Burst (10), wobei ein Header des stromaufwärtigen Bursts (10) eine Kennung und eine Präambel umfasst, die das empfangene Muster (110) umfasst;
- Bestimmen eines Musteridentifikationsdeskriptors (120) für die ONU (2), der ein Maß des Unterschieds zwischen dem empfangenen Muster (110) und einem vordefinierten Muster (121), das dem empfangenen Muster (110) entspricht, anzeigt;
- Speichern einer vorbestimmten Entsprechung zwischen vordefinierten Mustern und Signalwiederherstellungsauslegungen in einer vorbestimmten Nachschlagetabelle (130), die vordefinierte Musteridentifikationsdeskriptoren (131) umfasst; und wobei jedem vordefinierten Musteridentifikationsdeskriptor (131) eine Signalwiederherstellungsauslegung (132) entspricht;
- Zugreifen auf die vorbestimmte Nachschlagetabelle (130);
- Abgleichen des Musteridentifikationsdeskriptors (120) mit einem der vordefinierten Musteridentifikationsdeskriptoren (131) aus der vorbestimmten Nachschlagetabelle (130); und
- Nachschlagen einer Signalwiederherstellungsauslegung (100) in der Nachschlagetabelle (130), die dem vordefinierten Musteridentifikationsdeskriptor (131) entspricht, der mit dem Musteridentifikationsdeskriptor (120) übereinstimmt, wodurch eine Signalwiederherstellungsauslegung (100) bestimmt wird, die dem vordefinierten Muster (121) entspricht, das dem empfangenen Muster (110) des stromaufwärtigen Bursts (10) entspricht, wodurch eine Signalwiederherstellungsauslegung (100) für den stromaufwärtigen Burst (10) bestimmt wird.

13. Computerprogrammprodukt, das computerausführbare Anweisungen zum Bewirken, dass das System von Anspruch 1 mindestens Folgendes durchführt, umfasst:
- Empfangen eines stromaufwärtigen Bursts (10), der von einer optischen Netzwerkeinheit (2;3;4;5), abgekürzt ONU, zu einem optischen Leitungsabschluss (6;7), abgekürzt OLT, in einem passiven optischen Netzwerk (8), abgekürzt PON, übertragen wird, wobei der stromaufwärtige Burst (10) von Beeinträchtigungen einer stromaufwärtigen Übertragung verzerrt wird;
- Detektieren eines empfangenen Musters (110) im stromaufwärtigen Burst (10), wobei ein Header des stromaufwärtigen Bursts (10) eine Kennung und eine Präambel umfasst, die das empfangene Muster (110) umfasst;
- Bestimmen eines Musteridentifikationsdeskriptors (120) für die ONU (2), der ein Maß des Unterschieds zwischen dem empfangenen Muster (110) und einem vordefinierten Muster (121), das dem empfangenen Muster (110) entspricht, anzeigt;
- Speichern einer vorbestimmten Entsprechung zwischen vordefinierten Mustern und Signalwiederherstellungsauslegungen in einer vorbestimmten Nachschlagetabelle (130), die vordefinierte Musteridentifikationsdeskriptoren (131) umfasst; und wobei jedem vordefinierten Musteridentifikationsdeskriptor (131) eine Signalwiederherstellungsauslegung (132) entspricht;
- Zugreifen auf die vorbestimmte Nachschlagetabelle (130);
- Abgleichen des Musteridentifikationsdeskriptors (120) mit einem der vordefinierten Musteridentifikationsdeskriptoren (131) aus der vorbestimmten Nachschlagetabelle (130); und
- Nachschlagen einer Signalwiederherstellungsauslegung (100) in der Nachschlagetabelle (130), die dem vordefinierten Musteridentifikationsdeskriptor (131) entspricht, der mit dem Musteridentifikationsdeskriptor (120) übereinstimmt, wodurch eine Signalwiederherstellungsauslegung (100) bestimmt wird, die dem vordefinierten Muster (121) entspricht, das dem empfangenen Muster (110) des stromaufwärtigen Bursts (10) entspricht, wodurch eine Signalwiederherstellungsauslegung (100) für den stromaufwärtigen Burst (10) bestimmt wird.

14. Computerlesbares Speichermedium, das computerausführbare Anweisungen zum Durchführen der folgenden Schritte, wenn das Programm auf einem System von Anspruch 1 ausgeführt wird, umfasst:
- Empfangen eines stromaufwärtigen Bursts (10), der von einer optischen Netzwerkeinheit (2;3;4;5), abgekürzt ONU, zu einem optischen Leitungsabschluss (6;7), abgekürzt OLT, in einem passiven optischen Netzwerk (8), abgekürzt PON, übertragen wird, wobei der stromaufwärtige Burst (10) von Beeinträchtigungen der stromaufwärtigen Übertragung verzerrt wird;
- Detektieren eines empfangenen Musters (110) im stromaufwärtigen Burst (10), wobei ein Header des stromaufwärtigen Bursts (10) eine Kennung und eine Präambel umfasst, die das empfangene Muster (110) umfasst;
- Bestimmen eines Musteridentifikationsdeskriptors (120) für die ONU (2), der ein Maß des Unterschieds zwischen dem empfangenen Muster (110) und einem vordefinierten Muster (121), das dem empfangenen Muster (110) entspricht, anzeigt;
- Speichern einer vorbestimmten Entsprechung zwischen vordefinierten Mustern und Signalwiederherstellungsauslegungen in einer vorbestimmten Nachschlagetabelle (130), die vordefinierte Musteridentifikationsdeskriptoren (131) umfasst; und wobei jedem vordefinierten Musteridentifikationsdeskriptor (131) eine Signalwiederherstellungsauslegung (132) entspricht;
- Zugreifen auf die vorbestimmte Nachschlagetabelle (130);
- Abgleichen des Musteridentifikationsdeskriptors (120) mit einem der vordefinierten Musteridentifikationsdeskriptoren (131) aus der vorbestimmten Nachschlagetabelle (130); und
- Nachschlagen einer Signalwiederherstellungsauslegung (100) in der Nachschlagetabelle (130), die dem vordefinierten Musteridentifikationsdeskriptor (131) entspricht, der mit dem Musteridentifikationsdeskriptor (120) übereinstimmt, wodurch eine Signalwiederherstellungsauslegung (100) bestimmt wird, die dem vordefinierten Muster (121) entspricht, das dem empfangenen Muster (110) des stromaufwärtigen Bursts (10) entspricht, wodurch eine Signalwiederherstellungsauslegung (100) für den stromaufwärtigen Burst (10) bestimmt wird.

## Revendications

1. Système (1) pour déterminer une configuration de récupération de signaux (100) pour la transmission en amont de salves (10 ; 11 ; 12 ; 13) à partir d'unités de réseau optique (2 ; 3 ; 4 ; 5), abrégées ONU, à une terminaison de ligne optique (6 ; 7), abrégée OLT, dans un réseau optique passif (8), abrégé PON, dans lequel ledit système (1) comprend :
- des moyens configurés pour recevoir une salve (10) en amont de l'une desdites ONU (2), dans lequel ladite salve (10) en amont est faussée par des dégradations de la transmission en amont ;
- des moyens configurés pour détecter un motif reçu (110) dans ladite salve (10) en amont, dans lequel un en-tête de ladite salve (10) en amont comprend un identifiant et un préambule comprenant ledit motif reçu (110) ;
- des moyens configurés pour déterminer un descripteur d'identification de motif (120) pour ladite ONU (2) indiquant un niveau de différence entre ledit motif reçu (110) et un motif prédéfini (121) correspondant audit motif reçu (110);
- des moyens configurés pour stocker une correspondance prédéterminée entre des motifs prédéfinis et des configurations de récupération de signaux dans une table de consultation (130) prédéterminée comprenant des descripteurs d'identification de motifs prédéfinis (131); et dans lequel une configuration de récupération de signaux (132) correspond à chaque descripteur d'identification de motif prédéfini (131) ;
- des moyens configurés pour accéder à ladite table de consultation (130) prédéterminée ;
- des moyens configurés pour établir une concordance entre ledit descripteur d'identification de motif (120) et l'un desdits descripteurs d'identification de motifs prédéfinis (131) de ladite table de consultation (130) prédéterminée ; et
- des moyens configurés pour consulter, dans ladite table de consultation (130), une configuration de récupération de signaux (100) correspondant audit descripteur d'identification de motif prédéfini (131) concordant avec ledit descripteur d'identification de motif (120), déterminant ainsi une configuration de récupération de signaux (100) pour ladite salve (10) en amont correspondant audit motif prédéfini (121) correspondant audit motif reçu (110) de ladite salve (10) en amont, déterminant ainsi une configuration de récupération de signaux (100) pour ladite salve (10) en amont.

2. Système (1) selon la revendication 1, dans lequel ledit système (1) est en outre configuré pour recevoir des salves (10 ; 11 ; 12 ; 13) en amont de ladite pluralité d'ONU (2 ; 3 ; 4 ; 5) dudit PON (8), et est en outre configuré pour déterminer une configuration de récupération de signaux (100) pour chaque salve (10 ; 11 ; 12 ; 13) en amont reçue desdites ONU (2 ; 3 ; 4 ; 5).

3. Système (1) selon la revendication 1 ou 2, dans lequel ledit motif prédéfini (121) est compris dans un préambule (112) d'un en-tête (111) de ladite salve (10) en amont.

4. Système (1) selon la revendication 3, dans lequel ledit préambule (112) comprend 32 ou 128 bits.

5. Système (1) selon l'une des revendications précédentes, dans lequel ledit niveau de différence entre ledit motif reçu (110) et ledit motif prédéfini (121) indique un effet d'une ou plusieurs desdites dégradations de la transmission en amont entre ladite ONU (2 ; 3 ; 4 ; 5) et ledit système (1).

6. Système (1) selon l'une des revendications précédentes, dans lequel ledit système (1) est compris dans ladite OLT (6 ; 7).

7. Système (1) selon la revendication 1, dans lequel ladite configuration de récupération de signaux (100) comprend un ou plusieurs des éléments suivants :
- une égalisation par action directe ;
- un modèle d'égaliseur à rétroaction décisionnelle ;
- une estimation de séquences par maximum de vraisemblance.

8. Système (1) selon la revendication 7, dans lequel ledit système (1) est en outre configuré pour déterminer des configurations de poids de prise spécifiques pour ladite égalisation par action directe.

9. Système (1) selon la revendication 2, dans lequel ledit système est configuré pour accéder à une table de consultation (130) prédéterminée unique afin de déterminer des configurations de récupération de signaux (100) pour lesdites salves (10 ; 11 ; 12 ; 13) en amont reçues de ladite pluralité d'ONU (2 ; 3 ; 4 ; 5) dudit PON (8).

10. Système (1) selon la revendication 2, dans lequel ledit système est configuré pour accéder à une table de consultation (130) prédéterminée unique afin de déterminer des configurations de récupération de signaux (100) pour les salves (10 ; 11 ; 12 ; 13) en amont reçues d'une ONU (2 ; 3 ; 4 ; 5) nouvellement ajoutée audit PON (8).

11. Utilisation d'une correspondance prédéterminée entre des motifs prédéfinis et des configurations de récupération de signaux pour déterminer une configuration de récupération de signaux (100) pour la transmission en amont de salves (10 ; 11 ; 12 ; 13) à partir d'unités de réseau optique (2 ; 3 ; 4 ; 5), abrégées ONU, à une terminaison de ligne optique (6 ; 7), abrégée OLT, dans un réseau optique passif (8), abrégé PON, dans laquelle ladite détermination d'une configuration de récupération de signaux comprend :
- la réception d'une salve (10) en amont de l'une desdites ONU (2), dans laquelle ladite salve (10) en amont est faussée par des dégradations de la transmission en amont ;
- la détection d'un motif reçu (110) dans ladite salve (10) en amont, dans laquelle un en-tête de ladite salve (10) en amont comprend un identifiant et un préambule comprenant ledit motif reçu (110) ;
- la détermination d'un descripteur d'identification de motif (120) pour ladite ONU (2) indiquant un niveau de différence entre ledit motif reçu (110) et un motif prédéfini (121) correspondant audit motif reçu (110) ;
- le stockage d'une correspondance prédéterminée entre des motifs prédéfinis et des configurations de récupération de signaux dans une table de consultation (130) prédéterminée comprenant des descripteurs d'identification de motifs prédéfinis (131) ; et dans laquelle une configuration de récupération de signaux (132) correspond à chaque descripteur d'identification de motif prédéfini (131) ;
- l'accès à ladite table de consultation (130) prédéterminée ;
- l'établissement d'une concordance entre ledit descripteur d'identification de motif (120) et l'un desdits descripteurs d'identification de motifs prédéfinis (131) de ladite table de consultation (130) prédéterminée ; et
- la consultation, dans ladite table de consultation (130), d'une configuration de récupération de signaux (100) correspondant audit descripteur d'identification de motif prédéfini (131) concordant avec ledit descripteur d'identification de motif (120), déterminant ainsi une configuration de récupération de signaux (100) correspondant audit motif prédéfini (121) correspondant audit motif reçu (110) de ladite salve (10) en amont, déterminant ainsi une configuration de récupération de signaux (100) pour ladite salve (10) en amont.

12. Procédé pour déterminer une configuration de récupération de signaux (100) pour la transmission en amont de salves (10 ; 11 ; 12 ; 13) à partir d'unités de réseau optique (2 ; 3 ; 4 ; 5), abrégées ONU, à une terminaison de ligne optique (6 ; 7), abrégée OLT, dans un réseau optique passif (8), abrégé PON, dans lequel ledit procédé comprend les étapes suivantes :
- recevoir une salve (10) en amont de l'une desdites ONU (2), dans lequel ladite salve (10) en amont est faussée par des dégradations de la transmission en amont ;
- détecter un motif reçu (110) dans ladite salve (10) en amont, dans lequel un en-tête de ladite salve (10) en amont comprend un identifiant et un préambule comprenant ledit motif reçu (110) ;
- déterminer un descripteur d'identification de motif (120) pour ladite ONU (2) indiquant un niveau de différence entre ledit motif reçu (110) et un motif prédéfini (121) correspondant audit motif reçu (110) ;
- stocker une correspondance prédéterminée entre des motifs prédéfinis et des configurations de récupération de signaux dans une table de consultation (130) prédéterminée comprenant des descripteurs d'identification de motifs prédéfinis (131) ; et dans lequel une configuration de récupération de signaux (132) correspond à chaque descripteur d'identification de motif prédéfini (131) ;
- accéder à ladite table de consultation (130) prédéterminée ;
- établir une concordance entre ledit descripteur d'identification de motif (120) et l'un desdits descripteurs d'identification de motifs prédéfinis (131) de ladite table de consultation (130) prédéterminée ; et
- consulter, dans ladite table de consultation (130), une configuration de récupération de signaux (100) correspondant audit descripteur d'identification de motif prédéfini (131) concordant avec ledit descripteur d'identification de motif (120), déterminant ainsi une configuration de récupération de signaux (100) correspondant audit motif prédéfini (121) correspondant audit motif reçu (110) de ladite salve (10) en amont, déterminant ainsi une configuration de récupération de signaux (100) pour ladite salve (10) en amont.

13. Produit de programme informatique comprenant des instructions exécutables par ordinateur pour amener le système selon la revendication 1 à réaliser au moins ce qui suit :
- recevoir une salve (10) en amont transmise d'une unité de réseau optique (2 ; 3 ; 4 ; 5), abrégée ONU, à une terminaison de ligne optique (6 ; 7), abrégée OLT, dans un réseau optique passif (8), abrégé PON, dans lequel ladite salve (10) en amont est faussée par des dégradations de la transmission en amont ;
- détecter un motif reçu (110) dans ladite salve (10) en amont, dans lequel un en-tête de ladite salve (10) en amont comprend un identifiant et un préambule comprenant ledit motif reçu (110) ;
- déterminer un descripteur d'identification de motif (120) pour ladite ONU (2) indiquant un niveau de différence entre ledit motif reçu (110) et un motif prédéfini (121) correspondant audit motif reçu (110) ;
- stocker une correspondance prédéterminée entre des motifs prédéfinis et des configurations de récupération de signaux dans une table de consultation (130) prédéterminée comprenant des descripteurs d'identification de motifs prédéfinis (131) ; et dans lequel une configuration de récupération de signaux (132) correspond à chaque descripteur d'identification de motif prédéfini (131) ;
- accéder à ladite table de consultation (130) prédéterminée ;
- établir une concordance entre ledit descripteur d'identification de motif (120) et l'un desdits descripteurs d'identification de motifs prédéfinis (131) de ladite table de consultation (130) prédéterminée ; et
- consulter, dans ladite table de consultation (130), une configuration de récupération de signaux (100) correspondant audit descripteur d'identification de motif prédéfini (131) concordant avec ledit descripteur d'identification de motif (120), déterminant ainsi une configuration de récupération de signaux (100) correspondant audit motif prédéfini (121) correspondant audit motif reçu (110) de ladite salve (10) en amont, déterminant ainsi une configuration de récupération de signaux (100) pour ladite salve (10) en amont.

14. Support de stockage lisible par ordinateur comprenant des instructions exécutables par ordinateur pour réaliser les étapes suivantes lorsque le programme est exécuté sur un système selon la revendication 1 :
- recevoir une salve (10) en amont transmise d'une unité de réseau optique (2 ; 3 ; 4 ; 5), abrégée ONU, à une terminaison de ligne optique (6 ; 7), abrégée OLT, dans un réseau optique passif (8), abrégé PON, dans lequel ladite salve (10) en amont est faussée par des dégradations de la transmission en amont ;
- détecter un motif reçu (110) dans ladite salve (10) en amont, dans lequel un en-tête de ladite salve (10) en amont comprend un identifiant et un préambule comprenant ledit motif reçu (110) ;
- déterminer un descripteur d'identification de motif (120) pour ladite ONU (2) indiquant un niveau de différence entre ledit motif reçu (110) et un motif prédéfini (121) correspondant audit motif reçu (110) ;
- stocker une correspondance prédéterminée entre des motifs prédéfinis et des configurations de récupération de signaux dans une table de consultation (130) prédéterminée comprenant des descripteurs d'identification de motifs prédéfinis (131); et dans lequel une configuration de récupération de signaux (132) correspond à chaque descripteur d'identification de motif prédéfini (131) ;
- accéder à ladite table de consultation (130) prédéterminée ;
- établir une concordance entre ledit descripteur d'identification de motif (120) et l'un desdits descripteurs d'identification de motifs prédéfinis (131) de ladite table de consultation (130) prédéterminée ; et
- consulter, dans ladite table de consultation (130), une configuration de récupération de signaux (100) correspondant audit descripteur d'identification de motif prédéfini (131) concordant avec ledit descripteur d'identification de motif (120), déterminant ainsi une configuration de récupération de signaux (100) correspondant audit motif prédéfini (121) correspondant audit motif reçu (110) de ladite salve (10) en amont, déterminant ainsi une configuration de récupération de signaux (100) pour ladite salve (10) en amont.
